# EUROPEAN PATENT SPECIFICATION

(11) **EP 3 327 992 B1**
(45) Date of publication and mention of the grant of the patent: **18.09.2019**
(21) Application number: 16827093.2
(22) Date of filing: 16.05.2016
(51) Int. Cl.: H04W 48/00, H04W 8/26, H04W 48/18, H04W 48/08, H04W 76/27, H04W 76/11

(54) **METHOD OF SELECTING NETWORK SLICE AND SYSTEM UTILIZING SAME**
VERFAHREN ZUR AUSWAHL EINES NETZWERKSEGMENTS UND DIESES VERWENDENDES SYSTEM
PROCÉDÉ DE SÉLECTION DE TRANCHE DE RÉSEAU ET SYSTÈME L'UTILISANT

(30) Priority: 22.07.2015 CN 201510434262
(43) Date of publication of application: 30.05.2018
(73) Proprietor: ZTE Corporation, Shenzhen, Guangdong 518057 (CN)
(72) Inventor: ZONG, Zaifeng, Shenzhen Guangdong 518057 (CN)
(74) Representative: Novagraaf Technologies
(86) International application number: PCT/CN2016/082240
(87) International publication number: WO 2017/012402

(56) References cited:
- CN-A- 103 067 245
- CN-A- 103 595 647
- US-A1- 2013 007 232
- US-A1- 2013 007 232
- US-A1- 2014 372 617
- ZTE: "Motivation for Core Network Slicing Study in SA2", 3GPP DRAFT; S2-152420 MOTIVATION FOR NETWORK SLICING SID IN SA2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dubrovnik, Croatia; 20150706 - 20150710 6 July 2015 (2015-07-06), XP050987489, Retrieved from the Internet: URL:http://www.3gpp.org/ftp/Meetings_3GPP_ SYNC/SA2/Docs/ [retrieved on 2015-07-07]
- ERICSSON.: 'NETWORK FUNCTIONS VIRTUALIZATION AND SOFTWARE MANAGEMENT' ERICSSON WHITE PAPER 31 December 2014, page 4, AND 5, XP055303485

## Description

### Technical Field

The present application relates to, but not limited to, the field of communications.

### Background

Mobile communications have developed rapidly in twenty years, and bring great influences to various aspects, including life patterns and work patterns of people, social politics and social economy. Human society enters an efficient information age, and service application demands in various aspects are explosively increased, which may bring a great challenge a future radio mobile bandwidth system in terms of frequency, technology, operation and the like.

A future mobile network may also provide, in addition to service for human-to-human communications, access service for an increasing number of Internet of Things (IoT) terminals. The access of the Internet of Things brings new challenges and opportunities to the mobile network. Network demands of different types of Internets of Things may vary, some requiring a network to provide high-real-time and high-reliable service such as telemedicine, while some requiring the network to provide regular small-data-volume transmission service such as remote meter reading. It may be needed to appropriately optimize the mobile network to meet different service demands. An increasing number of Internets of Things make different increasing optimization demands for the mobile network, and some optimization demands may also contradict each other. Therefore, an integrated core network cannot meet various Internet of Things demands increasingly.

As Network Function Virtualization (NFV) emerges, a core network function may be constructed based on universal hardware instead of a special hardware platform. The emergence of the NFV makes it possible for an operator to construct different virtual core networks for different network service demands. A virtual core network constructed for different network service demands is referred to as a network slice. A network function in the virtual core network may be optimized and customized according to network service demands. The network slice based on an NFV technology may be quickly deployed as required, so as to quickly meet demands in different scenarios.

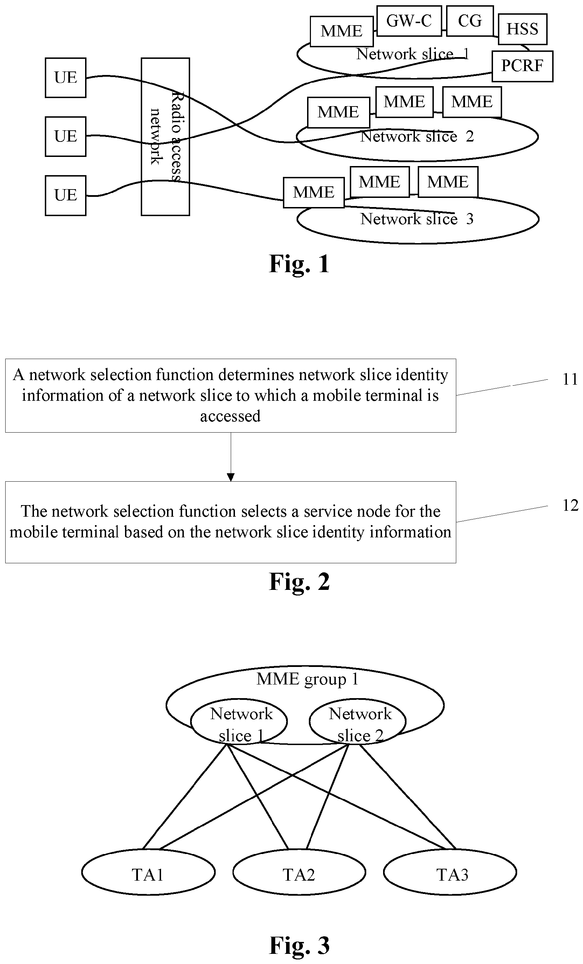

Fig. 1 is a schematic diagram of network slices. In Fig. 1, three network slices (network slices 1, 2 and 3) are exemplarily shown. One network slice may form one virtual core network providing mobile network access service for a group of User Equipment (UE). A typical network slice may include a group of virtualized core network functions such as a Mobility Management Entity (MME) function, a Policy and Charging Rules Function (PCRF) function, a Home Subscriber Server (HSS) function, a Gateway Controller (GW-C) function and a Charging Gateway (CG) function. Network slices may be constructed by operators according to demands and operator policies. Functions included in a network slice may be determined by an operator according to demands and operator policies. For example, some network slices may include, in addition to a control plane function, special forwarding planes. Some network slices may only include some basic control plane functions such as an MME function and a GW-C function, and may share other core network related functions with other network slices.

Construction of a network slice may need the support of NFV Management and Orchestration (MANO) architecture. An operator may determine information such as functions and capacity needed by a network slice according to network service demands of a large client, request MANO to apply for resources and instantiate the functions of the network slice, and allocate and configure a connecting relation between the functions, so as to construct a virtual core network.

In a network adopting a related technology, a base station, e.g., an evolved Node B (eNB) may be connected only with an MME group of each Public Land Mobile Network (PLMN). During access of a terminal, the terminal may select a PLMN to which the terminal is to be accessed. The eNB may uniquely determine a selected MME group according to the PLMN selected by the terminal, and then the eNB may select one service MME for the terminal from the MME group.

However, in the presence of multiple network slices in a network of an operator, in a PLMN, an eNB may be connected with multiple network slices. When an eNB is connected with MMEs of multiple network slices, the eNB may not be able to select a network slice providing the service and an MME in the network slice only according to a PLMN selected by a terminal.

US 2013/007232 discloses a method according to which virtualized network slices are associated with a UE in response to that UE requesting to utilize a mobile network environment. A mapping table database is used to assign UEs to one of the subgroups associated with the corresponding virtual private mobile network (VPMN) group, i.e. to the corresponding virtualized slice.

### Summary

The invention is defined in the appended set of claims.

The following is a brief introduction for a subject matter described herein in detail. The brief introduction is not intended to restrict the scope of protection of claims.

Some embodiments of the present disclosure provide a method and system for selecting a network slice, which may solve a problem in a related technology that a network slice cannot be selected when an operator deploys multiple network slices in a network.

A method for selecting a network slice may include the following acts. A network selection function may determine a network slice identity of a network slice to which a mobile terminal is accessed. The network selection function may select a service node for the mobile terminal based on the network slice identity information.

In an exemplary embodiment, the network selection function may determine the network slice identity information of the network slice to which the mobile terminal is accessed in one of the following alternative manners.

The network selection function may determine, by receiving the network slice identity information sent by the mobile terminal, the network slice identity information of the network slice to which the mobile terminal is accessed.

The network selection function may determine, based on identity information of the mobile terminal, the network slice identity information of the network slice to which the mobile terminal is accessed.

In an exemplary embodiment, the network slice identity information may include a network slice name or a network slice Identity (ID).

In an exemplary embodiment, the network selection function may determine, by receiving the network slice identity information sent by the mobile terminal, the network slice identity information of the network slice to which the mobile terminal is accessed in one of the following alternative manners.

The network selection function may receive the network slice identity information carried in a Non-Access Stratum (NAS) message or a Radio Resource Control (RRC) message sent by the mobile terminal.

The network selection function may receive, via a radio access point, the network slice identity information carried in an NAS message or an RRC message sent by the mobile terminal.

In an exemplary embodiment, before the network selection function determines, by receiving the network slice identity information sent by the mobile terminal, the network slice identity information of the network slice to which the mobile terminal is accessed, the method may further include an act of configuring allowed network slice information in the mobile terminal.

In an exemplary embodiment, the act of configuring the allowed network slice information in the mobile terminal may be implemented in one of the following alternative manners.

Allowed network slice information may be configured in the mobile terminal in an Open Mobile Alliance (OMA) Device Management (DM) manner.

Allowed network slice information may be configured in the mobile terminal in a pre-configured manner.

Allowed network slice information may be configured into a Universal Subscriber Identity Module (USIM) in the mobile terminal in a pre-configured manner.

In an exemplary embodiment, the network selection function may determine, based on the identity information of the mobile terminal, the network slice identity information of the network slice to which the mobile terminal is accessed in one of the following alternative manners.

The network selection function may determine the network slice identity information of the network slice to which the mobile terminal is accessed by querying a pre-configured mapping relation between the identity information of the mobile terminal and the network slice based on the identity information of the mobile terminal.

The network selection function may query location information of subscription data of the mobile terminal based on the identity information of the mobile terminal, acquire the subscription data based on the location information of the subscription data, and determine the network slice identity information of the network slice to which the mobile terminal is accessed based on the subscription data.

In an exemplary embodiment, the identity information of the mobile terminal may include an International Mobile Subscriber Identification Number (IMSI) of the mobile terminal.

In an exemplary embodiment, the network selection function may select the service node for the mobile terminal based on the network slice identity information in one of the following alternative manners.

The network selection function may determine the service node by querying a Domain Name System (DNS) according to a Fully Qualified Domain Name (FQDN) of a service node constructed based on the network slice identity information.

The network selection function may determine the service node by querying network topology information of the corresponding network slice based on the network slice identity information.

In an exemplary embodiment, the service node may be an MME in a fourth generation mobile communication technology (4G) or a logic entity having functions similar to those of the MME in the 4G.

In an exemplary embodiment, the network selection function may be deployed in a radio access point or a service node.

A method for selecting a network slice may include the following acts. A network selection function may determine network slice identity information of a network slice to which a mobile terminal is accessed. The network selection function may select a service node for the mobile terminal based on the network slice identity information. The service node may determine, based on an Allowed Network Slice List (ANSL), whether to allow the mobile terminal to be accessed to the network slice identified by the network slice identity information.

In an exemplary embodiment, the ANSL may be contained in subscription data of the mobile terminal.

A method for selecting a network slice may include the following acts. A network selection function may determine network slice identity information of a network slice to which a mobile terminal is accessed. The network selection function may select a service node for the mobile terminal based on the network slice identity information. The service node may allocate a temporary ID to the mobile terminal, and a network slice ID may be included in an MME ID and/or an MME group ID in the temporary ID.

A system for selecting a network slice may include a determination module and a processing module. The determination module may be configured to determine network slice identity information of a network slice to which a mobile terminal is accessed. The processing module may be configured to select a service node for the mobile terminal based on the network slice identity information.

In an exemplary embodiment, the determination module may be configured to:
determine, by receiving the network slice identity information sent by the mobile terminal, the network slice identity information of the network slice to which the mobile terminal is accessed; or,
determine, based on identity information of the mobile terminal, the network slice identity information of the network slice to which the mobile terminal is accessed.

In an exemplary embodiment, the network slice identity information may include a network slice name or a network slice ID.

In an exemplary embodiment, the system may be applied to a radio access point or a service node.

A computer-readable storage medium may store a computer-executable instruction, the computer-executable instruction being used to execute the method as mentioned in the above contents.

In some embodiments of the present disclosure, a network selection function may determine network slice identity information of a network slice to which a mobile terminal is accessed; and the network selection function may select a service node for the mobile terminal based on the network slice identity information. By virtue of the solution in some embodiments of the present disclosure, when an operator deploys multiple network slices, an appropriate network slice may be selected for a mobile terminal and serve the mobile terminal, thereby solving a problem in a related technology that a network slice cannot be selected when an operator deploys multiple network slices in a network.

After the drawings and the detailed descriptions are read and understood, other aspects may be understood.

### Brief Description of the Drawings

Fig. 1 is a schematic diagram of network slices;
Fig. 2 is a flowchart showing a method for selecting a network slice according to an embodiment of the present disclosure;
Fig. 3 is a schematic diagram of using part of an MME ID as a network slice ID;
Fig. 4 is a schematic diagram of using an MME group ID as a network slice ID;
Fig. 5 is a schematic diagram of identifying a network slice by combining an MME group ID and an MME ID;
Fig. 6 is a schematic diagram of acquiring service node information in a network slice based on a network slice name;
Fig. 7 is a schematic diagram of setting user subscription data;
Fig. 8 is a schematic diagram showing application architecture according to an embodiment of the present disclosure;
Fig. 9 is a flowchart showing a method for selecting a network slice according to a first embodiment of the present disclosure;
Fig. 10 is a flowchart showing a method for selecting a network slice according to a second embodiment of the present disclosure;
Fig. 11 is a schematic diagram showing a flow of initiating a Tracking Area Update (TAU) by a mobile terminal;
Fig. 12 is a flow diagram showing a flow of initiating a service request by a mobile terminal; and
Fig. 13 is a schematic diagram showing a system for selecting a network slice according to an embodiment of the present disclosure.

### Detailed Description of the Embodiments

The detailed description of the embodiments will be made below with the drawings. It will be appreciated that the embodiments described below are only used to describe and explain the present disclosure and not used to limit the present disclosure.

Fig. 2 is a flowchart showing a method for selecting a network slice according to an embodiment of the present disclosure. As shown in Fig. 2, the method for selecting a network slice provided in the present embodiment may include the acts as follows.

At act 11, a network selection function may determine network slice identity information of a network slice to which a mobile terminal is accessed.

Herein, the network slice identity information may include a network slice name or a network slice identity (ID).

Herein, the network slice name is the name of a network slice, and may be used to uniquely identify the network slice. The network slice name is unique in a network of an operator. A PLMN ID and a network slice name may uniquely identify a worldwide network slice. The network slice name may be a character string following a name format defined by RFC2181, RFC1035 and RFC1123. For example, a medical network may be identified by using a network slice name mHealth.ns, and a mobile broadband network may be identified by using a network slice name xMBB.ns. In addition, a network slice may have multiple network slice names at the same time.

The network slice ID is part of a Globally Unique Temporary UE Identity (GUTI), and may be used to uniquely identify a network slice in an operator network. A network slice to which a UE is accessed currently may be found based on a GUTI of the UE. An operator may take a part of an MME ID and/or an MME Group ID as the network slice ID.

In an embodiment, a part of the MME ID may serve as the network slice ID. The length of the MME ID is defined as 8 digits in a 4G. During network planning, the operator may divide the MME ID into two segments, namely one segment for identifying a network slice, and the other segment for identifying an MME in an MME group in the network slice. For example, high 3 digits of an MME ID may serve as a network slice ID, and low 5 digits may be used to identify the MME. In such a case, a system may support eight network slices in total, each network slice being able to accommodate 32 MMEs at most. As shown in Fig. 3, an MME Group 1 manages three Tracking Areas (TA) namely TA1, TA2 and TA3, the MME Group 1 has two network slices namely network slice 1 and network slice 2, each network slice has a group of MMEs, and each eNB in the three TAs managed by the MME Group 1 has an interface with each MME separately. After virtualization, MMEs in a network slice may be virtualized into a whole in an MME group, that is, there is only one virtual MME inside a network slice. By virtue of this solution, a network slice may be identified by using an MME ID, and 256 network slices may be supported at most. However, increasing network demands of operators may not be met.

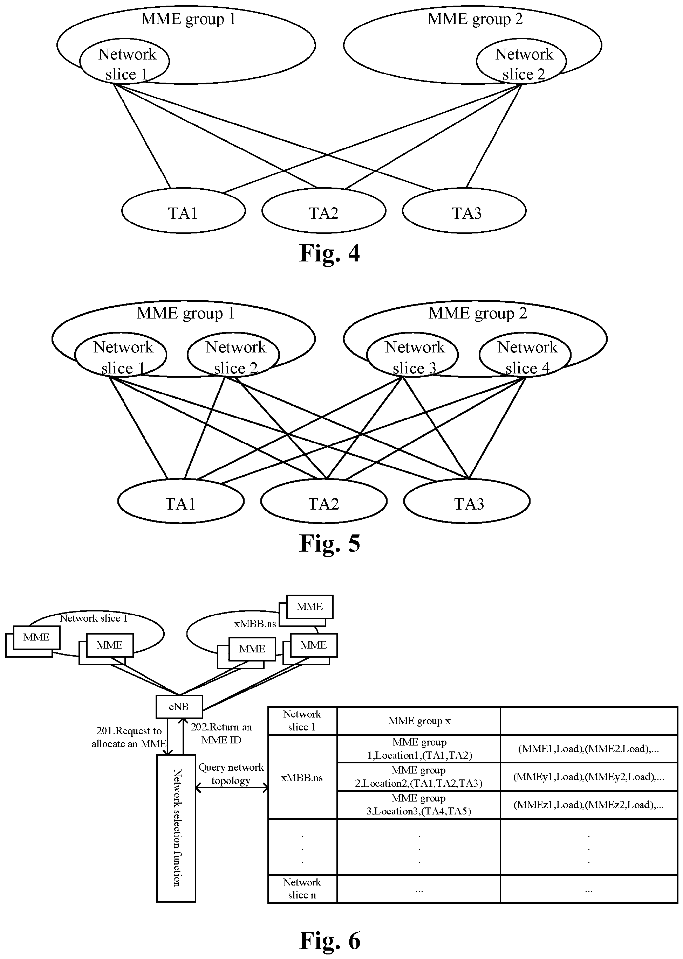

In another embodiment, the MME Group ID may serve as the network slice ID, and an MME Group may have only one network slice. As shown in Fig. 4, one MME Group is representative of one network slice. MME Group 1=network slice 1, and MME Group 2=network slice 2. This division method is advantageous in simplicity. Moreover, because the length of the MME Group ID is 16 digits, more network slices may be supported theoretically. However, the MME Group ID may need to identify different physical locations in addition to network slices. Moreover, such division may waste an ID space, such that the space of an MME ID cannot be fully utilized.

In still another embodiment, the MME Group ID and the MME ID may be combined to identify the network slice, that is, a combination formed by a segment of the MME Group ID and a segment of the MME ID may be utilized to identify the network slice. For example, low 5 digits of the MME Group ID and high 5 digits of the MME ID may be combined to identify the network slice. As shown in Fig. 5, a combination of an MME Group 1 and an MME Group 2 support four network slices in total, each network slice being able to accommodate 128 MMEs. In the present embodiment, it may be needed to reserve a segment in the MME Group ID to serve as a network slice ID, but space needed by an actual network slice ID may be planned by an operator as required.

In the embodiment, the act 11 may be implemented in one of the alternative manners as follows.

The network selection function may determine, by receiving the network slice identity information sent by the mobile terminal, the network slice identity information of the network slice to which the mobile terminal is accessed.

The network selection function may determine, based on the identity information of the mobile terminal, the network slice identity information of the network slice to which the mobile terminal is accessed.

Herein, the network selection function may determine, by receiving the network slice identity information sent by the mobile terminal, the network slice identity information of the network slice to which the mobile terminal is accessed in one of the alternative manners as follows.

The network selection function may receive the network slice identity information carried in an NAS message or an RRC message sent by the mobile terminal.

The network selection function may receive, via a radio access point, the network slice identity information carried in an NAS message or an RRC message sent by the mobile terminal.

In the embodiment, before the network selection function determines, by receiving the network slice identity information sent by the mobile terminal, the network slice identity information of the network slice to which the mobile terminal is accessed, the method may further include an act of configuring allowed network slice information in the mobile terminal.

Herein, the act of configuring allowed network slice information in the mobile terminal may be implemented in one of the alternative manners as follows.

Allowed network slice information may be configured in the mobile terminal in an OMA DM manner.

Allowed network slice information may be configured in the mobile terminal in a pre-configured manner.

Allowed network slice information may be configured into a USIM in the mobile terminal in a pre-configured manner.

For convenience of selection of the network slice, allowed network slice information (such as ANSL) may be configured in a mobile terminal. The mobile terminal may select a network slice, for access, from the ANSL as required during access. Network slices in the ANSL configured in the mobile terminal may be identified by using network slice IDs or network slice names. Meanwhile, each network slice in the ANSL may be associated with a network slice descriptor, that is, the network slice name or the network slice ID may be associated with the network slice descriptor. Herein, the network slice descriptor may be used to intuitive texts or pictures descriptive of the network slice, and the network slice descriptor may present different network slices to a user. When the mobile terminal presents the ANSL to the user, the network slice descriptor may be presented for convenience of reading of the user. If the ANSL configured in the mobile terminal includes multiple network slices, the mobile terminal may allow the user to manually select a network slice for access. When the user selects a network slice descriptor, the mobile terminal may automatically obtain, based on the network slice descriptor, the network slice name or the network slice ID for use in an access flow.

In the embodiment, if the mobile terminal can obtain a network slice name or a network slice ID of a network slice to which the user expects to be accessed (for example, select from the ANSL manually or automatically), the mobile terminal may need to send the network slice name or the network slice ID to the network selection function, so that the network selection function may use the network slice name or the network slice ID as reference when selecting a service node for the mobile terminal. Herein, the mobile terminal may send the network slice identity information to the network selection function in the following two alternative manners of sending in an RRC message or sending in an NAS message.

In the embodiment, the network selection function may determine, based on the identity information of the mobile terminal, the network slice identity information of the network slice to which the mobile terminal is accessed in one of the alternative manners as follows.

The network selection function may determine the network slice identity information of the network slice to which the mobile terminal is accessed by querying a pre-configured mapping relation between the identity information of the mobile terminal and the network slice based on the identity information of the mobile terminal.

The network selection function may query location information of subscription data of the mobile terminal based on the identity information of the mobile terminal, acquire the subscription data based on the location information of the subscription data, and determine the network slice identity information of the network slice to which the mobile terminal is accessed based on the subscription data.

Herein, the mapping relation between the identity information of the mobile terminal and the network slice may be integrated in a default HSS. The identity information of the mobile terminal may include an IMSI of the mobile terminal.

When the mobile terminal does not send the network slice identity information during access, or, when the network selection function determines not to accept the network slice identity information sent by the mobile terminal, the network selection function may determine, based on the identity information (such as IMSI) of the mobile terminal, the network slice identity information of the network slice to which the mobile terminal is to be accessed. In an embodiment, the IMSI may be segmented, and one segment of IMSI may be allocated to each network slice. Thus, the network selection function may conveniently determine the network slice to which the mobile terminal pertains based on the IMSI segments. However, this method may be difficult to execute, because tens of thousands of unplanned IMSIs have been in use in an operator network. In another embodiment, the network selection function may acquire a default network slice name or a default network slice ID of the mobile terminal from the subscription data of the mobile terminal. However, the network slice may have a demand on privatization of user subscription data (for security reasons), and the network selection function may have no right of accessing user subscription data in these network slices. In still another embodiment, a mapping relation between the identity information of the mobile terminal and the network slice may be pre-configured (such as IMSI-network slice mapping table). The network selection function may query the mapping table based on an IMSI of the mobile terminal to determine a network slice to which the mobile terminal corresponding to the IMSI pertains. In the embodiment, the IMSI-network slice mapping table may be integrated in an HSS in the default network slice, or independently stored as data.

At act 12, the network selection function may select a service node for the mobile terminal based on the network slice identity information.

Herein, the service node may be an MME in a 4G or a logic entity having functions similar to those of the MME in the 4G.

In the embodiment, the act 12 may be implemented in one of the alternative manners as follows.

The network selection function may determine the service node by querying a DNS according to an FQDN of a service node constructed based on the network slice identity information.

The network selection function may determine the service node by querying network topology information of the corresponding network slice based on the network slice identity information.

For example, an FQDN of a service node in a network slice may be constructed based on utilizing a network slice name. For example, an FQDN of an MME in a mobile broadband network may be constructed by using a network slice name xMBB.ns as follows: mme.tai.xMBB.ns. The FQDN may identify all serving MMEs corresponding to a certain Tracking Area Identity (TAI) in a mobile broadband network identified by xMBB.ns. When a DNS is queried, the DNS may return all serving MMEs corresponding to the TAI in the mobile broadband network to a querier, and the querier may select an MME from the returned MME list to serve as a service node of the mobile terminal. The DNS may also return an FQDN of a more accurate serving MME corresponding to the TAI to the querier. For example, the DNS may return mme_n.xMBB.ns to the querier, and the querier may query the DNS by using the new FQDN, so as to acquire an Internet Protocol (IP) address of a serving MME.

In another example, an FQDN of an MME in a mobile broadband network may be constructed by using a network slice name xMBB.ns as follows: mme.enbid.xMBB.ns. The FQDN may identify all MMEs serving a certain eNB in an xMBB.ns mobile broadband network slice. When a DNS is queried, the DNS may return all MMEs serving the eNB in the mobile broadband network to a querier, and the querier may select an MME from the returned MME list to serve the mobile terminal. The DNS may also return an FQDN of a more accurate MME serving the eNB to the querier. For example, the DNS may return mme_n.xMBB.ns to the querier, and the querier may query the DNS by using the new FQDN, so as to acquire an IP address of a serving MME.

The name or IP address of a service node in the network slice may be acquired from the network slice name in the DNS manner as well as other manners. Fig. 6 is a schematic diagram of acquiring service node information in a network slice based on a network slice name. As shown in Fig. 6, when receiving an access request from a mobile terminal, an eNB may request a network selection function to allocate an MME for access of the mobile terminal. The network selection function may query network topology information of this network slice based on a network slice name, so as to decide to select an MME to serve the mobile terminal. Herein, the network topology information of each network slice may be stored in a system. The network topology information of a network slice may include the following information: the quantity of MME Groups in the network slice, an attribute of each MME Group such as a deployment location of the MME Group, a served TA list and a connected eNB list, each MME and loads thereof in each MME group, and the like. As shown in Fig. 6, a network slice identified by a network slice name xMBB.ns may contain three MME Groups, where an MME Group 1 and an MME Group 2 are connected with the eNB in Fig. 6.

As shown in Fig. 6, at act 201, when the eNB receives the access request from the mobile terminal, the eNB may send a message to the network selection function, and request for allocating a service node MME to the mobile terminal. If a UE carries a network slice name of a network slice to which the UE requests to be accessed, for example, if the network slice name carried by the UE is xMBB.ns, the eNB may send the network slice name carried by the UE to the network selection function.

At act 202, the network selection function may search for the topology information of the network slice based on the network slice name. The network selection function learns of that there are three MME Groups in xMBB.ns in total based on the network slice name xMBB.ns. The network selection function may further filter the selected MME Group from the topology information of the network slice based on information of an eNB requesting to allocate an MME, such as an eNB ID and/or a TAI supported by the eNB. If the TAI supported by the eNB in Fig. 6 is TA1 and the MME Group 1 and the MME Group 2 in the network topology information in Fig. 6 support TA1, the MME Group 1 and the MME Group 2 may be selected to serve the mobile terminal. If the network selection function selects the MME Group 1 to serve the mobile terminal, the network selection function may select a light-load MME from the MME list of the MME Group 1 to serve the mobile terminal, for example, the network selection function may select MME2. The network selection function may return information (such as IP address of MME2) of the selected MME2 to the eNB. The eNB may continuously execute a subsequent access flow.

In the present embodiment, the network selection function may be deployed, for example, in a radio access point or a service node, or independently deployed.

In addition, after the act 12, the service node may determine, based on an ANSL, whether to allow the mobile terminal to be accessed to the network slice identified by the network slice identity information. The ANSL may be contained in subscription data of the mobile terminal.

Herein, the ANSL may include network slice names and/or network slice IDs of one or more network slices to which the mobile terminal is allowed to be accessed. The network slices in the ANSL may be sorted in priority, or may be sorted in no priority. If the subscription data of the mobile terminal contains the ANSL, when receiving an access request of the mobile terminal, the service node may query the ANSL in the subscription data, and determine whether to allow the mobile terminal to be accessed to this network slice. If the ANSL of the mobile terminal contains the network slice, access of the mobile terminal may be allowed, and if the network slice is not contained, access of the mobile terminal may be refused.

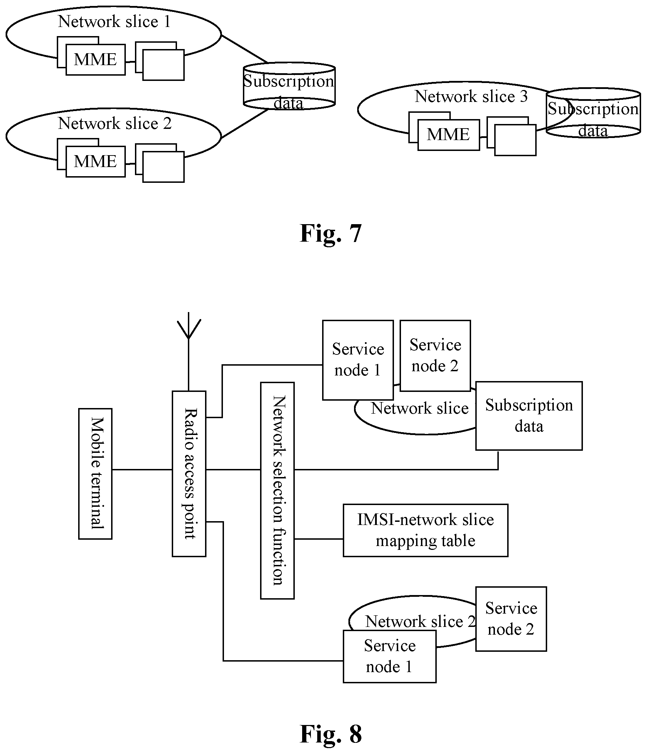

Fig. 7 is a schematic diagram of setting user subscription data. As shown in Fig. 7, subscription data of a user may be stored in network slices or stored at a storage location shared between the network slices. A network slice 1 and a network slice 2 in Fig. 7 may share a user subscription data storage space, and user subscription data in a network slice 3 may be stored in the network slice. When the user subscription data is stored in a network slice, if the mobile terminal is not allowed to be accessed to this network slice, the subscription data of the mobile terminal may not be found in a user subscription database within this network slice. In such a condition, authentication of the mobile terminal fails, and a service node of a network slice may refuse access of the mobile terminal accordingly.

In addition, after the act 12, the service node may allocate a temporary ID to the mobile terminal. A network slice ID may be included in an MME ID and/or an MME group ID in the temporary ID. During a subsequent access, the mobile terminal may send the network slice ID in the temporary ID to the network selection function.

To sum up, compared with a network slice name, a network slice ID not only is shorter, but also may be conveniently used by a radio access point for selecting a network slice and a service node. But, the defects may be as follows. During network planning, once a network slice ID space is re-planned, an operator may need to re-configure allowed network slice information for each mobile terminal, thereby reducing the flexibility of a system. Although the flow is slightly complex during selection of a network slice and a service node, the operator may plan the network slice more flexibly.

Another embodiment of the present disclosure provides a computer-readable storage medium, which may store a computer-executable instruction, the computer-executable instruction being used to execute the above-mentioned method for selecting a network slice.

Fig. 8 is a schematic diagram showing application architecture according to an embodiment of the present disclosure. As shown in Fig. 8, a network selection function may be configured to select a corresponding service node in a network slice for a mobile terminal based on a network slice name or a network slice ID and other information (current location of mobile terminal (such as TAI or eNB ID)). Herein, the network selection function may be integrated into a radio access point or a service node, or independently set. Logically, the independently-set network selection function and other public service functions (such as DNS and user subscription data) may form a default network slice. When the radio access point cannot select the service node for the mobile terminal, the radio access point may send a message to the network selection function in the default network slice. After selecting the service node for the mobile terminal, the network selection function may re-direct the message sent by the radio access point to the selected service node.

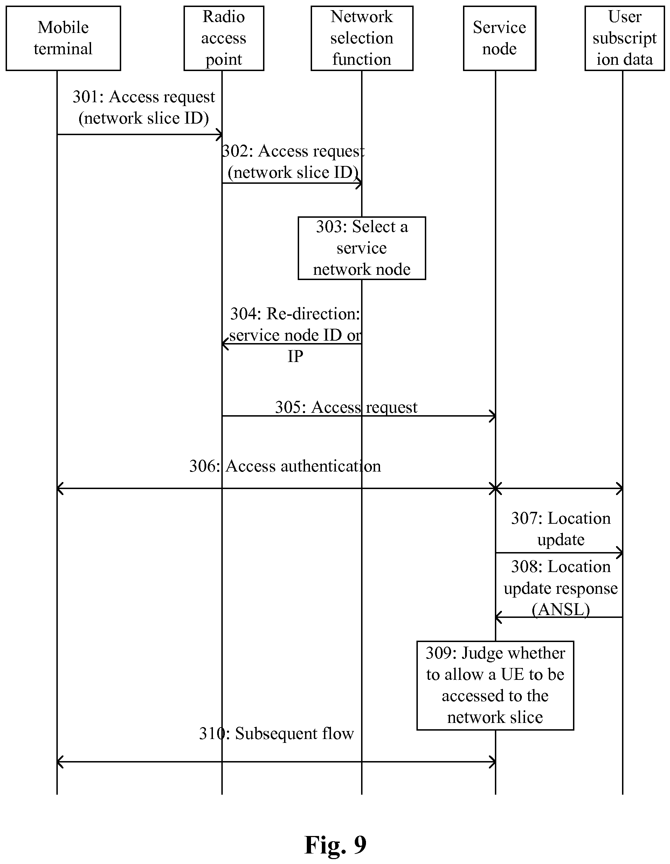

Fig. 9 is a flowchart showing a method for selecting a network slice according to a first embodiment of the present disclosure. Referring to both Fig. 8 and Fig. 9, in the present embodiment, during initial access of a mobile terminal, the mobile terminal may send a selected network slice ID (network slice name or network slice ID) in an initial access request message to a network selection function. The network selection function may select, based on a network slice requested by the mobile terminal, a service node in the corresponding network slice for the mobile terminal. As shown in Fig. 9, the solution in the present embodiment may include the acts as follows.

At act 301, a mobile terminal (UE) may send an access request to a radio access point, the access request in a 4G being an Attach Request message. When sending the access request, the mobile terminal may determine a network slice to which the mobile terminal is to be accessed, and send network slice identity information to the radio access point. The mobile terminal may send the selected network slice ID to the radio access point in an NAS message or an RRC message.

At act 302, if the radio access point cannot select a service node based on the network slice identity information, the radio access point may send the access request message (including network slice ID selected by UE) received from the mobile terminal to a network selection function.

At act 303, the network selection function may select a service node for the UE based on the network slice identity information selected by the UE. The network selection function may construct an FQDN of the service node based on the network slice identity information selected by the UE, and location information of the radio access point such as a radio access point ID or a TAI of a cell where the UE is located, and obtain an accurate ID or IP address of the service node in the selected network slice in a manner of querying a DNS. The manner of selecting, by the network selection function, the service node in the network slice is not limited to a DNS manner. In an exemplary embodiment, the network selection function may select the service node based on a network slice name, UE location information (such as radio access point ID and current TAI) or network topology information. The description is as shown in, for example, FIG. 6, and thus will not be repeated.

At act 304, the network selection function may send a message to the radio access point, and re-direct the access request of the radio access point to the selected service node.

At act 305, the radio access point may send the access request message to an appointed service node.

At act 306, the service node may authenticate the mobile terminal. If a subscription database is stored in a network slice and the mobile terminal is not allowed to be accessed to the network slice, subscription data corresponding to the mobile terminal will not be found in the subscription database. If the subscription data corresponding to the mobile terminal is not present, the service node may determine that the authentication of the mobile terminal fails and refuse access of the mobile terminal. If the subscription data of the mobile terminal is found and authentication is successful, a subsequent flow is continued.

At act 307, the service node may send a location update request to an HSS.

At act 308, the HSS may send the subscription data of the mobile terminal to the service node. An ANSL may be contained in user subscription data.

At act 309, the service node may check whether a network slice where a current service node is located is in the ANSL in the user subscription data. If the network slice where the service node is located is in the ANSL in the user subscription data, access of the mobile terminal may be allowed. If the network slice where the service node is located is not in the ANSL in the user subscription data, access of the mobile terminal may be refused.

At act 310, a subsequent flow such as setup of an IP session and bearer setup may be continued between the mobile terminal and a network. The service node may allocate a temporary ID (GUTI) to the mobile terminal in an Attach Accept message, a network slice ID being contained in an MME Group ID and/or an MME ID in the temporary ID.

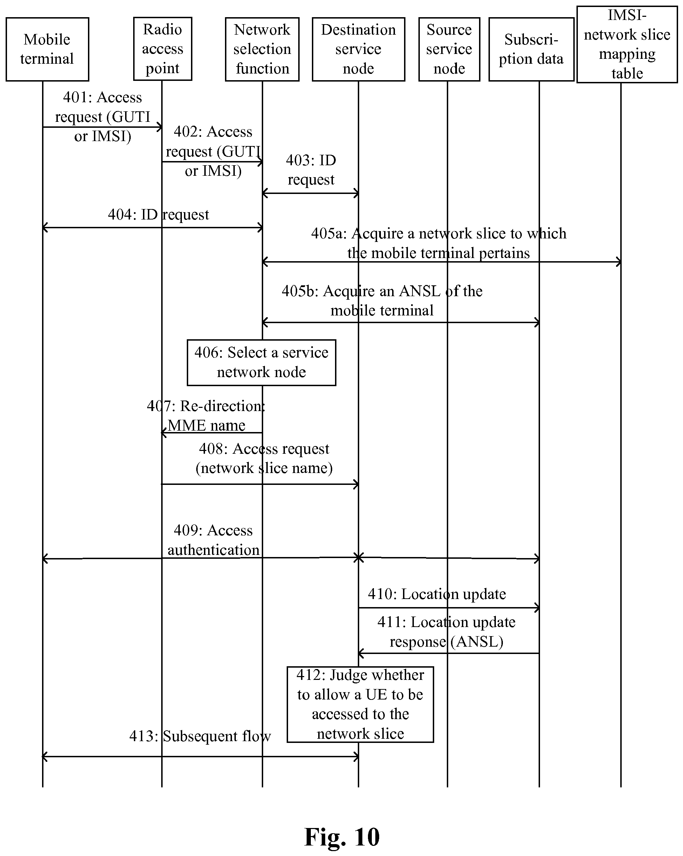

In addition, in order to support higher flexibility, when some mobile terminals cannot send network slice identities to a network during access or a network selection function determines not to accept network slices selected by the mobile terminals (for example, the network selection function cannot support a network slice of a Home PLMN (HPLMN) selected by a roaming user), the network selection function may select network slices for the mobile terminals during access of the mobile terminals. Fig. 10 is a flowchart showing a method for selecting a network slice according to a second embodiment of the present disclosure. Referring to both Fig. 8 and Fig. 10, in the present embodiment, a network selection function may acquire identity information of a mobile terminal and then select a network slice and a service node for the mobile terminal based on the identity information.

In the present embodiment, the following two alternative manners of acquiring, by the network selection function, the identity information of the mobile terminal are provided: acquisition from a source service node and direct acquisition from the mobile terminal. In the embodiment, the identity information of the mobile terminal may be, for example, an IMSI of the mobile terminal. Herein, if the identity information of the mobile terminal is acquired from the source service node, the source service node may send subscription data of the mobile terminal or a default network slice ID to the network selection function, and the network selection function may select a network slice to which the mobile terminal is accessed for the mobile terminal based on the subscription data. When the network selection function cannot obtain the subscription data or the default network slice from the source service node, the network selection function may query a network slice to which the mobile terminal pertains based on the IMSI of the mobile terminal. Alternatively, the network selection function may query the location of the subscription data of the mobile terminal based on the IMSI of the mobile terminal, acquire the subscription data from an HSS where the mobile terminal is located, and select a network slice to which the mobile terminal is accessed for the mobile terminal based on the subscription data.

As shown in Fig. 10, the solution in the present embodiment may include acts as follows.

At act 401, a mobile terminal may send an access request to a radio access point, the access request in a 4G being an Attach Request message, and an IMSI of the mobile terminal or a temporary ID (such as GUTI of 4G) during previous access being carried in the access request sent by the mobile terminal.

At act 402, the radio access point may send the access request message received from the mobile terminal to a network selection function.

At act 403, if the temporary ID (such as GUTI) of the mobile terminal is carried in the access request message, the network selection function may search for a service node (namely source service node) serving a UE previously based on the GUTI, and send an ID request to the service node so as to acquire the IMSI of the mobile terminal. If the context of the mobile terminal is stored in the source service node, the source service node may send the IMSI of the UE and an ANSL in subscription data or a default network slice ID to the network selection function.

At act 404, if the network selection function cannot successfully obtain the IMSI of the mobile terminal, the network selection function may send an ID request to the mobile terminal to acquire the IMSI of the mobile terminal. The mobile terminal may send its own IMSI to the network selection function after receiving the ID request.

At act 405a, if the network selection function cannot obtain the default network slice ID of the mobile terminal, the network selection function may query an IMSI-network slice mapping table based on the IMSI, so as to determine a network slice to which the mobile terminal pertains, and may also return the location of subscription data (HSS) corresponding to the mobile terminal by querying the mapping table.

At act 405b, if the network selection function obtains the location of the HSS corresponding to the mobile terminal when querying the IMSI-network slice mapping table, the network selection function may send a message to the HSS, acquire subscription data associated with the network slice, and select the network slice for the mobile terminal based on the subscription data.

At act 406, the network selection function may select a service node based on the network slice selected for the mobile terminal. The network selection function may construct an FQDN of the service node based on network slice identity information of the network slice selected for the mobile terminal and the radio access point, such as a radio access point ID or a TAI of a cell where the mobile terminal is located, and obtain an accurate ID or IP address of the service node in the selected network slice in a manner of querying a DNS. However, the manner of selecting, by the network selection function, the service node in the network slice is not limited to a DNS manner. In an exemplary embodiment, the network selection function may select the service node based on a network slice name, location information of the mobile terminal (such as radio access point ID and current TAI) or network topology information. The description is as shown in, for example, FIG. 6, and thus will not be repeated.

At act 407, the network selection function may send a message to the radio access point, and re-direct the access request of the radio access point to the selected service node.

At act 408, the radio access point may send the access request message to an appointed service node (namely destination service node).

At act 409, the service node may authenticate the terminal. If a subscription database is stored in a network slice, when the subscription data corresponding to the mobile terminal is not present in the subscription database within the network slice, the service node may determine that the authentication of the mobile terminal fails and refuse access of the mobile terminal. If the subscription data of the mobile terminal is found and authentication is successful, a subsequent flow is continued.

At act 410, the service node may send a location update request to the HSS.

At act 411, the HSS may send the subscription data of the mobile terminal to the service node, wherein an ANSL is contained in user subscription data.

At act 412, the service node may check whether a network slice where a current service node is located is in the ANSL in the user subscription data. If the network slice where the service node is located is in the ANSL in the user subscription data, access of the mobile terminal may be allowed. If the network slice where the service node is located is not in the ANSL in the user subscription data, access of the mobile terminal may be refused.

At act 413, a subsequent flow such as setup of an IP session and bearer setup may be continued between the mobile terminal and a network. The service node may allocate a temporary ID (GUTI) to the mobile terminal in an Attach Accept message, a network slice ID being contained in an MME Group ID and/or an MME ID in the temporary ID.

In addition, after the mobile terminal is attached to the network, the mobile terminal may enter an IDLE state, and move to a new location under the IDLE state. When a service request flow or a TAU flow is initiated at a new location, signaling of the mobile terminal should be sent to a previously-attached network slice. Because a temporary ID allocated to the mobile terminal by a service node in the network slice to which the mobile terminal is accessed contains a pertaining network slice ID before the mobile terminal becomes IDLE, a system may import the signaling sent from the mobile terminal to the network slice to which the mobile terminal is attached based on a network slice ID in the temporary ID.

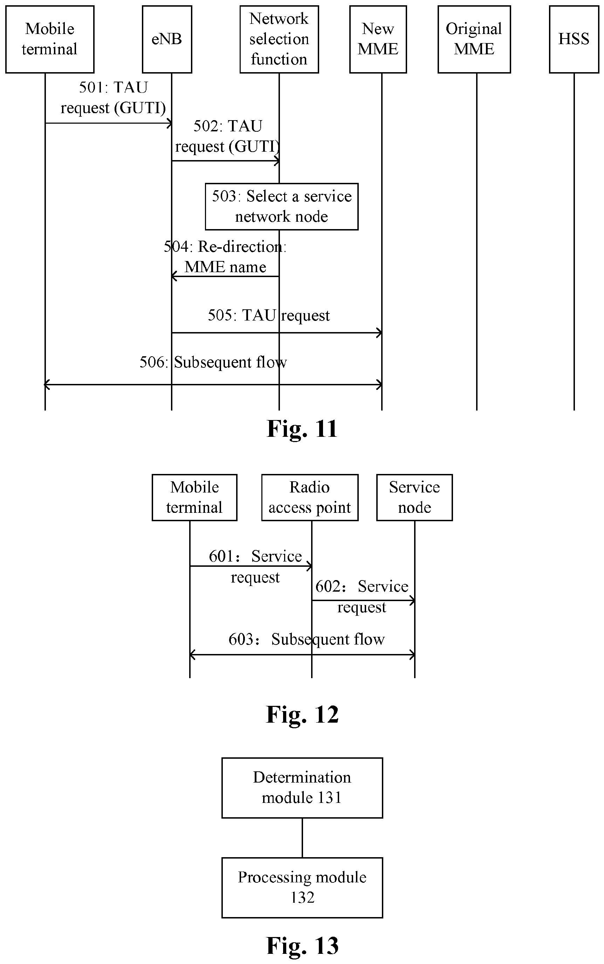

Fig. 11 is a schematic diagram showing a flow of initiating a TAU by a mobile terminal. The acts as shown in Fig. 11 are described in detail as follows.

At act 501, a mobile terminal may send a TAU request to a radio access point, and carry, in a message, a GUTI allocated to the mobile terminal by a network.

At act 502, if the radio access point (eNB) cannot send the TAU request to an MME identified by an MME Group ID and/or an MME ID in the GUTI, the radio access point may send the TAU request sent from the mobile terminal to a network selection function.

At act 503, the network selection function may check the GUTI of a UE, and determine a network slice to which the UE is accessed. The MME ID in the GUTI may be used to identify a network slice, or, the MME Group ID may be used to identify a network slice, or, the MME Group ID and the MME ID may be combined to identify a network slice. After determining the network slice to which the mobile terminal is accessed, the network selection function may select an accessible service node in the network slice as a service node of the mobile terminal for the mobile terminal.

At act 504, the network selection function may send a message to the radio access point, and re-direct the TAU request of the radio access point to the selected service node (namely New MME).

At act 505, the radio access point may send the TAU request to the selected service node.

At act 506, a subsequent flow may be continued. Anew service node may allocate a new GUTI to the UE in a TAU accept message, an identity of the new service node being contained in the new GUTI.

Fig. 12 is a flow diagram showing a flow of initiating a service request by a mobile terminal. The acts as shown in Fig. 12 are described as follows.

At act 601, a mobile terminal (e.g., a UE) may send a service request to a radio access point, and the UE may send identity information of a service node to the radio access point in an RRC message sending the service request. The identity information of the service node may include a network slice ID and a service node identity.

Herein, when the network slice ID adopts an MME ID or a part of the MME ID (as shown in Fig. 3), the mobile terminal may carry the MME ID in the RRC message sending the service request.

When the network slice ID adopts an MME Group ID (as shown in Fig. 4) or combination of the MME Group ID and the MME ID (as shown in Fig. 5), the mobile terminal may not only carry the MME ID in the RRC message sending the service request, but also send to the radio access point a field, which is planned to serve as a network slice ID, in the MME Group ID by containing the field in the RRC message sending the service request. If the last 8 digits of the MME Group ID are planned to serve as the network slice identity information, the last 8 digits of the MME Group ID and the MME ID may be carried in the RRC message, sending the service request, of the mobile terminal. In such a condition, because the existing protocol only supports to transfer the MME ID, it may be needed to extend the existing protocol. If the protocol cannot be extended, it may be needed to analyze a GUTI in an NAS message, so as to obtain the network slice ID.

At act 602, the radio access point may acquire an ID and IP address of a service node serving the UE based on the combination of the network slice ID and the MME ID carried in the RRC message, sending the service request, of the mobile terminal. If the network slice identity information is a part of the MME ID, the radio access point may acquire the IP address of the service node by using the existing method. If the network slice identity information adopts the combination of the MME Group ID and the MME ID, the radio access point may need to address the service node by combining the MME Group ID and the MME ID. The radio access point may send the service request of the mobile terminal to the service node.

At act 603, a subsequent flow may be performed between the service node and the UE.

In addition, as shown in Fig. 13, still another embodiment of the present disclosure provides a system for selecting a network slice. The system may include a determination module 131 and a processing module 132. The determination module 131 may be configured to determine network slice identity information of a network slice to which a mobile terminal is accessed. The processing module 132 may be configured to select a service node for the mobile terminal based on the network slice identity information.

In an embodiment, the determination module 131 may be configured to:
determine, by receiving the network slice identity information sent by the mobile terminal, the network slice identity information of the network slice to which the mobile terminal is accessed; or,
determine, based on identity information of the mobile terminal, the network slice identity information of the network slice to which the mobile terminal is accessed.

Herein, the network slice identity information may include a network slice name or a network slice ID.

In the embodiment, the system may be applied to a radio access point or a service node, or independently deployed.

In addition, the processing flow about the above-mentioned system is as mentioned in the above-mentioned method, and will not be elaborated herein.

Those of ordinary skill in the art may understand that all or some of the acts in the above-mentioned embodiment may be implemented by using a computer program flow. The computer program may be stored in a computer-readable storage medium. The computer program is executed on a corresponding hardware platform (such as system, device, apparatus and instrument). During execution, the computer program may include one of the acts of the method embodiment or a combination thereof.

In an exemplary embodiment, all or some of the acts in the above-mentioned embodiment may also be implemented by using an integrated circuit. These acts may be manufactured into integrated circuit modules respectively, or multiple modules or acts therein are manufactured into a single integrated circuit module.

The apparatus/function module/function unit in the above-mentioned embodiment may be implemented by using a general computation apparatus. They may be centralized on a single computation apparatus or may be distributed on a network composed of multiple computation apparatuses.

When being implemented in a form of software function module and sold or used as an independent product, the apparatus/function module/function unit in the above-mentioned embodiment may be stored in a computer-readable storage medium. The above-mentioned computer-readable storage medium may be a read-only memory, a magnetic disk or an optical disk.

The above displays and describes the basic principle and main characteristics of the present disclosure and the advantages of the present disclosure. The present disclosure is not limited by the above-mentioned embodiment. The above-mentioned embodiment and the description only describe the principle of the present disclosure. The present disclosure is susceptible to various changes and improvements without departing from the scope of the present disclosure.

### Industrial Applicability

Some embodiments of the present disclosure may solve a problem in a related technology that a network slice cannot be selected when an operator deploys multiple network slices in a network, and may select an appropriate network slice for serving a mobile terminal.

## Claims

1. A method for selecting a network slice, comprising:
determining, by a network selection function, network slice identity information of a network slice to which a mobile terminal is accessed (11);
wherein the method is **characterized by** comprising: selecting, by the network selection function, a service node for the mobile terminal based on the network slice identity information (12);
wherein determining, by a network selection function, network slice identity information of a network slice to which a mobile terminal is accessed (11) comprises: determining, by the network selection function, the network slice identity information of the network slice to which the mobile terminal is accessed by receiving the network slice identity information sent by the mobile terminal.

2. The method as claimed in claim 1, wherein the network slice identity information comprises: a network slice name or a network slice identity, ID.

3. The method as claimed in claim 1, wherein determining, by the network selection function, the network slice identity information of the network slice to which the mobile terminal is accessed by receiving the network slice identity information sent by the mobile terminal comprises:
receiving, by the network selection function, the network slice identity information carried in a Non-Access Stratum, NAS, message or a Radio Resource Control, RRC, message sent by the mobile terminal; or,
receiving, by the network selection function via a radio access point, the network slice identity information carried in an NAS message or an RRC message sent by the mobile terminal.

4. The method as claimed in claim 1, wherein before determining, by the network selection function, the network slice identity information of the network slice to which the mobile terminal is accessed by receiving the network slice identity information sent by the mobile terminal, the method further comprises: configuring allowed network slice information in the mobile terminal.

5. The method as claimed in claim 4, wherein configuring allowed network slice information in the mobile terminal comprises:
configuring the allowed network slice information in the mobile terminal in an Open Mobile Alliance, OMA, Device Management, DM, manner; or,
configuring the allowed network slice information in the mobile terminal in a pre-configured manner; or,
configuring the allowed network slice information into a Universal Subscriber Identity Module, USIM, in the mobile terminal in a pre-configured manner.

6. The method as claimed in claim 1, wherein selecting, by the network selection function, a service node for the mobile terminal based on the network slice identity information (12) comprises:
determining, by the network selection function, the service node by querying a Domain Name System, DNS, according to a Fully Qualified Domain Name, FQDN, of a service node constructed based on the network slice identity information; or,
determining, by the network selection function, the service node by querying network topology information of the corresponding network slice based on the network slice identity information.

7. The method as claimed in claim 1, wherein
the service node is a Mobility Management Entity, MME, in a fourth generation mobile communication technology, 4G, or a logic entity having functions similar to those of the MME in the 4G; and
the network selection function is deployed in a radio access point or a service node.

8. The method as claimed in claim 1, wherein after selecting, by the network selection function, a service node for the mobile terminal based on the network slice identity information (12), the method further comprises:
determining, by the service node, whether to allow the mobile terminal to be accessed to the network slice identified by the network slice identity information based on an Allowed Network Slice List, ANSL.

9. The method as claimed in claim 8, wherein the ANSL is contained in subscription data of the mobile terminal.

10. The method as claimed in claim 1, wherein after selecting, by the network selection function, a service node for the mobile terminal based on the network slice identity information (12), the method further comprises:
allocating, by the service node, a temporary ID to the mobile terminal, wherein a network slice ID is contained in an MME ID and/or an MME group ID in the temporary ID.

11. A system for selecting a network slice, comprising:
a determination module (131), configured to determine a network slice identity of a network slice to which a mobile terminal is accessed;
wherein the system is **characterized by** comprising: a processing module (132), configured to select a service node for the mobile terminal based on the network slice identity information;
wherein the determination module (131) is configured to: determine, by receiving the network slice identity information sent by the mobile terminal, the network slice identity information of the network slice to which the mobile terminal is accessed.

## Patentansprüche

1. Verfahren zum Auswählen einer Netzwerk-Slice, umfassend:
Bestimmen, durch eine Netzwerkauswahlfunktion, von Netzwerk-Slice-Identitätsinformationen einer Netzwerk-Slice, auf die von einem mobilen Endgerät zugegriffen wird (11);
wobei das Verfahren **dadurch gekennzeichnet ist, dass** es umfasst: Auswählen, durch die Netzwerkauswahlfunktion, eines Dienstknotens für das mobile Endgerät auf Basis der Netzwerk-Slice-Identitätsinformationen (12);
wobei das Bestimmen, durch eine Netzwerkauswahlfunktion, von Netzwerk-Slice-Identitätsinformationen einer Netzwerk-Slice, auf die von einem mobilen Endgerät zugegriffen wird (11), umfasst: Bestimmen, durch die Netzwerkauswahlfunktion, der Netzwerk-Slice-Identitätsinformationen der Netzwerk-Slice, auf die vom mobilen Endgerät zugegriffen wird, durch Empfangen der Netzwerk-Slice-Identitätsinformationen, die vom mobilen Endgerät gesendet werden.

2. Verfahren nach Anspruch 1, wobei die Netzwerk-Slice-Identitätsinformationen umfassen: einen Netzwerk-Slice-Namen oder eine Netzwerk-Slice-Identität, ID.

3. Verfahren nach Anspruch 1, wobei das Bestimmen, durch die Netzwerkauswahlfunktion, der Netzwerk-Slice-Identitätsinformationen der Netzwerk-Slice, auf die vom mobilen Endgerät zugegriffen wird, durch Empfangen der vom mobilen Endgerät gesendeten Netzwerk-Slice-Identitätsinformationen umfasst:
Empfangen, durch die Netzwerkauswahlfunktion, der Netzwerk-Slice-Identitätsinformationen, die in einer Non-Access Stratum-, NAS, Nachricht oder einer Radio Resource Control-, RRC, Nachricht übermittelt werden, welche vom mobilen Endgerät gesendet wird; oder
Empfangen der Netzwerk-Slice-Identitätsinformationen, die in einer vom mobilen Endgerät gesendeten NAS-Nachricht oder einer RRC-Nachricht übermittelt werden, durch die Netzwerkauswahlfunktion über einen Funkzugangspunkt.

4. Verfahren nach Anspruch 1, wobei vor dem Bestimmen der Netzwerk-Slice-Identitätsinformationen der Netzwerk-Slice, auf die vom mobilen Endgerät zugegriffen wird, durch die Netzwerkauswahlfunktion durch Empfangen der vom mobilen Endgerät gesendeten Netzwerk-Slice-Identitätsinformationen das Verfahren weiter umfasst: Konfigurieren von zulässigen Netzwerk-Slice-Informationen im mobilen Endgerät.

5. Verfahren nach Anspruch 4, wobei das Konfigurieren von zulässigen Netzwerk-Slice-Informationen im mobilen Endgerät umfasst:
Konfigurieren der zulässigen Netzwerk-Slice-Informationen im mobilen Endgerät in einer Open Mobile Alliance-, OMA, Device Management-, DM, Art; oder
Konfigurieren der zulässigen Netzwerk-Slice-Informationen im mobilen Endgerät in einer vorkonfigurierten Art; oder
Konfigurieren der zulässigen Netzwerk-Slice-Informationen in einer vorkonfigurierten Art in einem Universal Subscriber Identity Module, USIM, im mobilen Endgerät.

6. Verfahren nach Anspruch 1, wobei das Auswählen, durch die Netzwerkauswahlfunktion, eines Dienstknotens für das mobile Endgerät auf Basis der Netzwerk-Slice-Identitätsinformationen (12) umfasst:
Bestimmen des Dienstknotens durch die Netzwerkauswahlfunktion durch Abfragen eines Domain Name Systems, DNS, gemäß einem Fully Qualified Domain Name, FQDN, eines Dienstknotens, der auf Basis der Netzwerk-Slice-Identitätsinformationen konstruiert wird; oder
Bestimmen des Dienstknotens durch die Netzwerkauswahlfunktion durch Abfragen von Netzwerktopologie-Informationen der entsprechenden Netzwerk-Slice auf Basis der Netzwerk-Slice-Identitätsinformationen.

7. Verfahren nach Anspruch 1, wobei
der Dienstknoten eine Mobility Management Entity, MME, in einer Mobilkommunikationstechnologie der vierten Generation, 4G, oder eine logische Entität ist, die Funktionen aufweist, welche jenen der MME im 4G ähnlich sind; und
die Netzwerkauswahlfunktion in einem Funkzugangspunkt oder einem Dienstknoten eingesetzt wird.

8. Verfahren nach Anspruch 1, wobei das Verfahren nach dem Auswählen, durch die Netzwerkauswahlfunktion, eines Dienstknotens für das mobile Endgerät auf Basis der Netzwerk-Slice-Identitätsinformationen (12) weiter umfasst:
Bestimmen, durch den Dienstknoten auf Basis einer Allowed Network Slice List, ANSL, ob es dem mobilen Endgerät gestattet werden soll, auf die von den Netzwerk-Slice-Identitätsinformationen identifizierte Netzwerk-Slice zuzugreifen.

9. Verfahren nach Anspruch 8, wobei die ANSL in Teilnehmerdaten des mobilen Endgeräts enthalten ist.

10. Verfahren nach Anspruch 1, wobei das Verfahren nach dem Auswählen, durch die Netzwerkauswahlfunktion, eines Dienstknotens für das mobile Endgerät auf Basis der Netzwerk-Slice-Identitätsinformationen (12) weiter umfasst:
Zuweisen, durch den Dienstknoten, einer temporären ID zum mobilen Endgerät, wobei eine Netzwerk-Slice-ID in einer MME-ID und/oder einer MME-Gruppen-ID in der temporären ID enthalten ist.

11. System zum Auswählen einer Netzwerk-Slice, umfassend:
ein Bestimmungsmodul (131), das dazu konfiguriert ist, eine Netzwerk-Slice-Identität einer Netzwerk-Slice zu bestimmen, auf die von einem mobilen Endgerät zugegriffen wird;
wobei das System **dadurch gekennzeichnet ist, dass** es umfasst: ein Verarbeitungsmodul (132), das dazu konfiguriert ist, einen Dienstknoten für das mobile Endgerät auf Basis der Netzwerk-Slice-Identitätsinformationen auszuwählen;
wobei das Bestimmungsmodul (131) dazu konfiguriert ist: die Netzwerk-Slice-Identitätsinformationen der Netzwerk-Slice, auf die vom mobilen Endgerät zugegriffen wird, durch Empfangen der vom mobilen Endgerät gesendeten Netzwerk-Slice-Identitätsinformationen zu bestimmen.

## Revendications

1. Procédé de sélection d'une tranche de réseau, comprenant :
la détermination, par une fonction de sélection de réseau, d'informations d'identité de tranche de réseau d'une tranche de réseau à laquelle un terminal mobile accède (11) ;
dans lequel le procédé est **caractérisé en ce qu'**il comprend : la sélection, par la fonction de sélection de réseau, d'un noeud de service pour le terminal mobile sur la base des informations d'identité de tranche de réseau (12) ;
dans lequel la détermination, par une fonction de sélection de réseau, d'informations d'identité de tranche de réseau d'une tranche de réseau à laquelle un terminal mobile accède (11), comprend : la détermination, par la fonction de sélection de réseau, des informations d'identité de tranche de réseau de la tranche de réseau, à laquelle le terminal mobile accède, par la réception des informations d'identité de tranche de réseau envoyées par le terminal mobile.

2. Procédé selon la revendication 1, dans lequel les informations d'identité de tranche de réseau comprennent : un nom de tranche de réseau ou une identité, ID, de tranche de réseau.

3. Procédé selon la revendication 1, dans lequel la détermination, par la fonction de sélection de réseau, des informations d'identité de tranche de réseau de la tranche de réseau, à laquelle le terminal mobile accède, par la réception des informations d'identité de tranche de réseau envoyées par le terminal mobile comprend :
la réception, par la fonction de sélection de réseau, des informations d'identité de tranche de réseau transportées dans un message de strate de non-accès, NAS, ou un message de contrôleur de ressource radio, RRC, envoyé par le terminal mobile ; ou,
la réception, par la fonction de sélection de réseau via un point d'accès radio, des informations d'identité de tranche de réseau transportées dans un message NAS ou un message RRC envoyé par le terminal mobile.

4. Procédé selon la revendication 1, dans lequel, avant la détermination, par la fonction de sélection de réseau, des informations d'identité de tranche de réseau de la tranche de réseau, à laquelle le terminal mobile accède, par la réception des informations d'identité de tranche de réseau envoyées par le terminal mobile, le procédé comprend en outre : la configuration d'informations de tranche de réseau autorisée dans le terminal mobile.

5. Procédé selon la revendication 4, dans lequel la configuration d'informations de tranche de réseau autorisée dans le terminal mobile comprend :
la configuration des informations de tranche de réseau autorisée dans le terminal mobile selon une manière de gestion de dispositif, DM, d'alliance mobile ouverte, OMA ; ou,
la configuration des informations de tranche de réseau autorisée dans le terminal mobile selon une manière préconfigurée ; ou,
la configuration des informations de tranche de réseau autorisée dans un module d'identité universelle d'abonné, USIM, dans le terminal mobile selon une manière préconfigurée.

6. Procédé selon la revendication 1, dans lequel la sélection, par la fonction de sélection de réseau, d'un noeud de service pour le terminal mobile sur la base des informations d'identité de tranche de réseau (12) comprend :
la détermination, par la fonction de sélection de réseau, du noeud de service par l'interrogation d'un système de nom de domaine, DNS, selon un nom de domaine totalement qualifié, FQDN, d'un noeud de service construit sur la base des informations d'identité de tranche de réseau ; ou
la détermination, par la fonction de sélection de réseau, du noeud de service par l'interrogation d'informations de topologie de réseau de la tranche de réseau correspondante sur la base des informations d'identité de tranche de réseau.

7. Procédé selon la revendication 1, dans lequel
le noeud de service est une entité de gestion de mobilité, MME, dans une technologie de communication mobile de quatrième génération, 4G, ou une entité logique ayant des fonctions similaires à celles de la MME dans la 4G ; et
la fonction de sélection de réseau est déployée dans un point d'accès radio ou un noeud de service.

8. Procédé selon la revendication 1, dans lequel, après la sélection, par la fonction de sélection de réseau, d'un noeud de service pour le terminal mobile sur la base des informations d'identité de tranche de réseau (12), le procédé comprend en outre :
la détermination, par le noeud de service, de l'autorisation au terminal mobile d'accéder à la tranche de réseau identifiée par les informations d'identité de tranche de réseau sur la base d'une liste de tranches de réseau autorisées, ANSL.

9. Procédé selon la revendication 8, dans lequel l'ANSL est contenue dans des données d'abonnement du terminal mobile.

10. Procédé selon la revendication 1, dans lequel, après la sélection, par la fonction de sélection de réseau, d'un noeud de service pour le terminal mobile sur la base des informations d'identité de tranche de réseau (12), le procédé comprend en outre :
l'attribution, par le noeud de service, d'une ID temporaire au terminal mobile, dans lequel une ID de tranche de réseau est contenue dans une ID de MME et/ou une ID de groupe de MME dans l'ID temporaire.

11. Système de sélection d'une tranche de réseau, comprenant :
un module de détermination (131), configuré pour déterminer une identité de tranche de réseau d'une tranche de réseau à laquelle un terminal mobile accède ;
dans lequel le système est **caractérisé en ce qu'**il comprend : un module de traitement (132), configuré pour sélectionner un noeud de service pour le terminal mobile sur la base des informations d'identité de tranche de réseau ;
dans lequel le module de détermination (131) est configuré pour : déterminer, par la réception des informations d'identité de tranche de réseau envoyées par le terminal mobile, les informations d'identité de tranche de réseau de la tranche de réseau à laquelle le terminal mobile accède.
